Europäisches Patentamt

(19) European Patent Office

Office européen des brevets

(11) Publication number : **0 243 389**
**B1**

(12) **EUROPEAN PATENT SPECIFICATION**

(45) Date of publication of patent specification :
13.12.89

(21) Application number : 86905813.1

(22) Date of filing : 24.09.86

(86) International application number :
PCT/EP 86/00601

(87) International publication number :
WO/8702289 (23.04.87 Gazette 87/09)

(51) Int. Cl.$^4$ : **B 24 B 47/20**, B 23 Q 35/28

(54) DEVICE FOR REDUCING THE ROUGHNESS.

(30) Priority : 18.10.85 IT 8361985

(43) Date of publication of application :
04.11.87 Bulletin 87/45

(45) Publication of the grant of the patent :
13.12.89 Bulletin 89/50

(84) Designated contracting states :
AT BE CH DE FR GB IT LI LU NL SE

(56) References cited :
FR--E-- 89 947
GB--A-- 981 556
US--A-- 1 422 055
US--A-- 1 452 917
US--A-- 1 469 926
US--A-- 2 227 243
US--A-- 3 052 067
US--A-- 3 090 172

(73) Proprietor : MAGNI, Giulio
Via Turconi, 33
I-21050 Cantello (IT)

(72) Inventor : MAGNI, Giulio
Via Turconi, 33
I-21050 Cantello (IT)

## Description

The device in conformity with the present invention refers to a device for reducing the roughness, which operation shall be indicated for shortness in text and claims only by the terms polishing and finish grinding respectively, and specifically of the roughness of plane or cylindrical surfaces of a body machined by means of a tool respectively on a planer or a lathe or a grinder or machine tools of this type, roughness being intended as the whole of the unevennesses, that is the most part of the microgeometrical errors, which make the real surface of a body different from the technical one, opposed to the macrogeometrical form errors which make the technical surface different from the ideal one.

Treatments exist up to now suited to reduce the roughness after the said machining on the machine tool, the amount of which roughness we shall indicate with the value Ra and namely the mean arithmetical value adopted by the DIN standardization as well as by UNI, and which after said machining generally amounts respectively to Ra = 1 micrometer, unit of measure which we shall indicate in the following for shortness with the symbol used in the techniques of « μm », after machining with the planer, Ra = 0,25 μm after machining with the lathe, Ra = 0,1 μm after machining on the grinder.

The treatments up to now employed allow at the most to bring the roughness to a value of Ra of about 0,004 μm, limits which are attained only with the operations of polishing with very fine-grained grinding wheels on ground surfaces.

But for carrying out finishing operations with so low Ra values many machining hours are required. In addition, as the present means available for regulation of the pressure of the wheels against the surface to be polished allow only a practically fixed position of their saddle, and as the surfaces have after machining operations with the planer, the lathe and also after grinding, especially in the case of very long cylindrical bodies, still macrogeometrical form errors, it follows that the action of the wheel cannot be perfectly equal in all the portions subjected to polishing with the consequence that the roughness cannot be reduced everywhere to the required values and namely uniformly over the whole surface to be polished, as well as particularly after special treatments of the surfaces as for instance after chrome plating, the higher pressure in some portions can cause injuries related to the previously occurred treatments.

In other polishing operations as those effected on the lathe, after the relevant machining, wheels and brushes and lubricators are used which heavily soil machines and surrounding room with both the drawbacks of having the operators working in dirty places and of having to provide for heavy cleaning operations and restoring of machines and rooms.

US-A-1,422,055 teaches a method for grinding beveled surfaces of spectacle glasses, which do not have circular shape, and it adopts, in a field of the art and for solving a technical problem both different from that of this invention, a device which works as a pantograph to maintain automatically the spectacle glass in contact of the grinding wheel by means of counterweights according to a cam with the same shape as the glass.

In this invention it will be adopted an analogous device in a field and scale completely different from that of the previous Patent and for overcoming the limits of roughness constituted by the macrogeometrical errors of the surface to be polished to a very low value of roughness.

Aim of the device in conformity with the present invention is to eliminate the aforesaid drawbacks and to carry out an operation of reduction of the roughness perfectly homogeneous in any portion of the surface to be polished and so to attain much more lower values of the residual roughness, even lower than 0,001 μm, and with times of processing much lower than the present ones and without the risk of causing injuries to the eventual previous treatment of the polished surfaces.

The device for reducing the roughness of plane or cylindrical surfaces of a body machined on a machine tool, in conformity with the present invention, is composed of a wheel having cylindrical form and granulometry suited to the required reduction of the roughness, mounted with rotary motion according to its axis on a sliding saddle having very low friction on a fixed guide which is directly or indirectly rigidly fixed to the base of the machine whereon the tool machining has been effected or on a similar one, said saddle being provided in addition to the usual means to control approaching of the wheel to the surface of the body, which must be disconnectable from the saddle when the wheel is brought with its peripherical working surface in contact with the surface to be polished, with means suited to push it during the whole polishing operation in such a way that the working surface of the wheel remains in contact with the surface to be polished with a perfectly constant pressure uniformly all over the said surface, independently therefore of the macrogeometrical errors of the surface, consisting said means of one or more counterweights i. e. one or more cables fastened at one of their ends to the said wheel-carrying saddle and at the other end respectively to one or more heavy free bodies, and of one or more sets of transmission pulleys, the axis of which is fastened to the fixed part of the device and hence of the base of the machine tool so that the cable, or cables, owing to the action of the weight of the aforesaid heavy bodies, cause the saddle and as a consequence the wheel to adhere to the surface to be polished constantly in a uniform way, the value of the weights of said bodies, being so determined as to achieve the required value of the said pressure, which of course can be subsequently modified on the same device by modifying the weight of the bodies acting as counterweights.

In an improvement of the previous solution the counterweight or counterweights are connected to the wheel-carrying saddle in such a way that the resultant of their thrusts on the saddle act practically according to the longitudinal axis of the guide of the saddle.

In a further improvement the motor operating the wheel is connected to the wheel-carrying saddle and possibly also to the wheel with means suited to avoid transmitting its possible vibrations.

In a further improvement of the previous solutions the device is provided with one or more releving cables namely directly or indirectly connectable to the wheel-carrying saddle at one of their ends and to a fix structure in respect to the machine tool base at the other end and with eventual means to bring the cable or cables under tension, the sizes and resistance of cable or cables being such that when the wheel-carrying saddle is in working position it is relieved by a vertical resultant force upward such as to reduce the force which its mass discharges on the guide and consequently to reduce proportionally the friction between saddle and guide so that the action of the pressure of the wheel of the device against the surface to be polished occurs with still more uniformity.

In another solution the device includes only the means suited to push the saddle during the whole phase of polishing and possibly the releving cable or cables, being such means directly connected to the saddle of the wheel which the machine tool whereon polishing is effected is equipped with, and namely usually a grinding machine, and thus such means directly acting on said saddle and hence on the wheel.

The above exposé stresses the important advantage of the new device as with it the action of the wheel is constant and uniform independently from the macrogeometrical form errors, the working surface of the wheel always remaining adhering with the same pressure on the whole surface to be polished.

In order to explain better the device according to the present invention an embodiment shall be described, as an example only, with reference to the enclosed drawings wherein :

— figure 1 is a plan view ;
— figure 2 is a side view ;
— figure 3 is a perspective view from F.

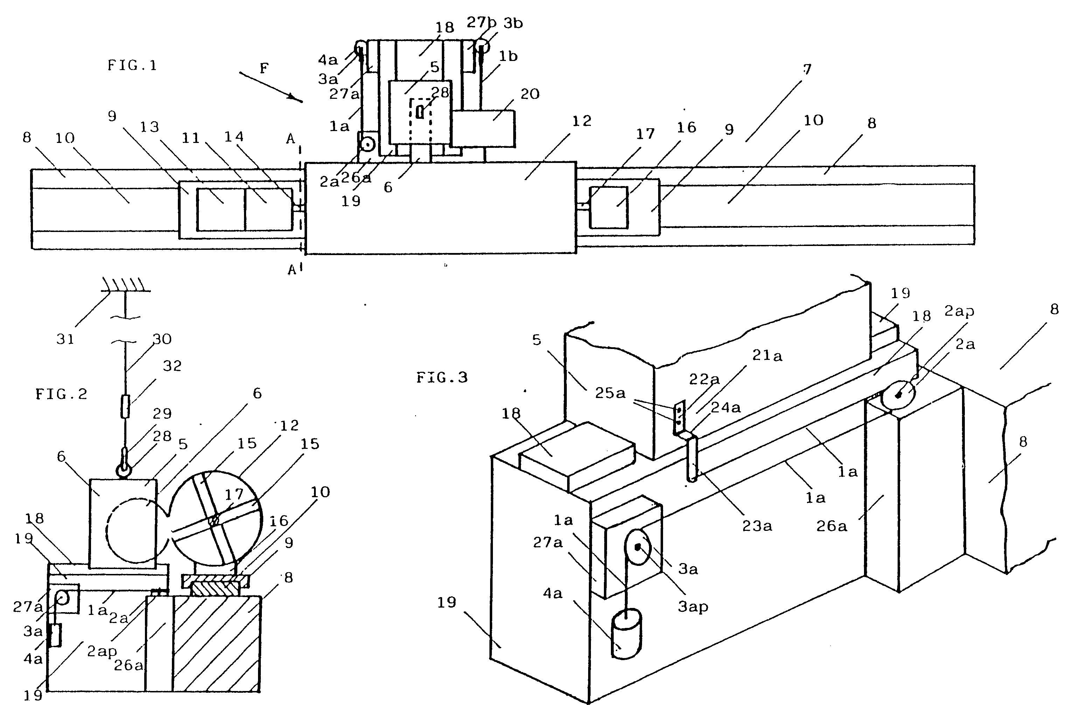

The device for reducing the roughness of the example comprises only the means for automatical continuous approaching, including two sets of elements a and b, each one consisting of a cable 1, of a vertical axis pulley 2 and of a horizontal axis pulley 3 as well as of a weight 4. The two sets of elements are applied symmetrically one on one side and the other one on the other side of the saddle 5 which carries the very fine-graned wheel 6 of a grinding machine 7, of which the figure shows very schematically the base 8, the slide 9 which is moved with alternate movement along its guide 10, integral with the base 8. Of the two sets a and b of the automatical feed means the drawings practically show only the one arranged on the left when looking to the plan of figure 1, where also part of the cable 1b and of the weight 4b and the pulley 3b are seen ; not all of the motors and the transmissions of the general movements of the grinding machine are shown on the drawings, for easiness and also because they are well known to the prior art. The saddle 11 carrying the workpiece 12 consisting of a steel cylinder, which peripherical surface has already been ground, is made integral with the slide 9. The saddle 11 is provided with the motor 13 which transmits the rotary movement through its shaft 14 and the two cross members 15, made integral with the cylinder 12. At the other end the cylinder is supported in free rotation by the saddle 16 of the tailstock through the pin 17 and two cross members similar to the previous ones but not shown. The wheel-carrying saddle 5 has a sliding coupling with minimal friction with the guide 18 integral to the side extension 19 of the base 8, to said saddle is integral the casing of the motor 20 which transmits the rotary movement to the wheel 6. The saddle 5 can be shifted manually until the peripherical surface 6p of the wheel 6 adheres to the peripherical surface 12p of the cylinder to be polished 12, then the saddle is pushed automatically and constantly by the resultant thrust of the actions of the counterweights 4a and 4b, which thanks to the symmetrical arrangement of said means acts practically according to the axis of longitudinal symmetry of the guide 18 of the saddle 5, said counterweights 4a and 4b are connected to the free end of the cables 1a and 1b, while the other end of said cables is connected to the shaped flat bars 21a and 21b, each one composed of three parts, of which the two external 22a and 22b and 23a and 23b are reciprocally parallel and vertical while the intermediate one is horizontal, the first upper parts 22a and 22b are respectively fastened to the two sides of the saddle by means of the screws 25a and 25b, and the parts 24a and 24b are so sized as to keep the subsequent parts 23a and 23b off from the sides of the base 19, the said parts 23a and 23b being connected to the cables 1a and 1b, which pass then in the peripheral grooves of the two pulleys 2a-2b and 3a-3b. The pins 2ap and 2bp supporting in free rotation the pulleys 2a and 2b are vertical and their lower ends are fastened to the horizontal upper surface of the parallelepiped lateral extensions 26a and 26b of the base 19, while the pins 3pa and 3bp supporting in free rotation the pulleys 3a and 3b are horizontal and are fastened at one end to the lateral surface of the extensions 27a and 27b of the base 19 of the wheel-carrying saddle, the positions of the pulleys 2a-2b and 3a-3b being such that the first two sections of the cables 1a and 1b are horizontal, while the third sections of the cables 1a and 1b are vertical as their free ends are connected to the counterweights 4a and 4b. The wheel-carrying saddle 5 is

provided in addition with the ring 28, which is fastened on the upper surface 5s of the same, to said ring can be fastened through the slip hook 29 the lower end of the cable 30 which is fastened at the other end to a structure 31 which is fixed with respect to the grinding machine base, said cable is provided with the turnbuckle 32 which allows, after connection of the cable with the slip hook 29 to the ring 28, to be so stretched as to transmit to the wheel-carrying saddle 5 such a vertical stress upward as to reduce the force with which the mass of said saddle presses on its guide 18, and so to allow a considerable reduction of the friction of said coupling and hence a much more uniform operation of the counterweight system in pushing the wheel against the technical surface of the cylinder 12.

## Claims

1. Device for reducing the roughness of plane or cylindrical surfaces by finish grinding of a machined workpiece to a $R_a$ value even less than 0,001 μm on a machine tool, comprising a grinding wheel (6) having a cylindrical form and a granulometry suited to the required reduction of the roughness, mounted for rotational motion about its axis on a saddle (5) sliding with very low friction on a fixed guide (18) which is directly or indirectly rigidly mountable on the base (8) of the machine (7) whereon prior machining has been effected or of a similar machine, said saddle (5), in addition to being subject to means controlling approach of the wheel to the surface of the workpiece until the grinding wheel (6) has been brought with its peripherical working surface into contact with the surface (12) to be finish ground, being provided with means suited to urge the saddle (5) during the whole finish grinding operation in such a way that the working surface of the wheel (6) remains in contact with the surface (12) to be finish ground with a constant pressure uniformly all over the said surface, and thus independently of the macrogeometrical errors of the surface, said means consisting of one or more counterweights (a, b) i. e. of one or more cables (1a, 1b) fastened at one of their ends to the said wheel-carrying saddle (5) and at the other end respectively to one or more heavy free bodies (4a, 4b) and of one or more sets of transmission pulleys (2a, 2b, 3a, 3b), the axis (2ab, 2bb, 3ab, 3bb) of which is fastened to the fixed guide or other fixed part of the machine tool so that the cable, or cables (1a, 1b), owing to the action of the weight of the aforesaid heavy bodies (4a, 4b), urge the saddle (5) and as a consequence the wheel (6) to contact the surface (12) to be finish ground constantly in a uniform way, the value of the weights of said bodies (4a, 4b), being so determined as to achieve the required value of the said pressure, which may be subsequently modified by modifying the weight of the body or bodies (4a, 4b) acting as counterweights.

2. Device as claimed in claim 1 characterized in that the counterweight or counterweights are connected to the wheel-carrying saddle (5) so that the resultant of their thrusts on the saddle acts practically according to the longitudinal axis of the guide (18) of the saddle (5).

3. Device as claimed in claims 1, 2 and 3 characterized in that the motor (20) operating the wheel (6) is connected to the wheel-carrying saddle (5) and possibly also to the wheel (6) with means suited to avoid transmitting its eventual vibrations.

4. Device as claimed in claims 1, 2 and 3 characterized in that it is provided with one or more relieving cables (30) namely directly or indirectly connectable to the wheel-carrying saddle (5) at one of their ends and to a fix structure (31) in respect to the machine tool base (8) at the other end and with eventual means (32) to bring the cable or cables under tension the sizes and resistance of the cable or cables (30) and the regulation of the possible tensioning means (32) being such that when the wheel-carrying saddle (5) is in working position it is relieved by a vertical resultant force upward such as to reduce the force which its mass discharges on the guide (18) and consequently to reduce proportionally the friction between saddle (5) and guide (18) so that the action of the pressure of the wheel (6) of the device against the surface (12) to be finish ground occurs with still more uniformity.

5. Device as claimed in any one of the previous claims characterized in that it includes only the means (a, b) suited to push the saddle (5) during the whole operation of finish grinding and possibly the relieving cable or cables (30), such means being directly connected to the saddle (5) of the wheel (6) which the machine tool whereon polishing is effected is equipped with, and namely usually a grinding machine, and thus such means directly acting on said saddle (5) and hence on the wheel.

## Patentansprüche

1. Vorrichtung zum Verringern der Rauhigkeit einer ebenen oder zylindrischen Oberfläche durch Fertigschleifen eines bearbeiteten Werkstücke auf einen Ra-Wert auch weniger als 0,001 μm auf einer Werkzeugmaschine, bestehend aus einer Schleifscheibe (6) mit einer zylindrischen Form und einer Kornverteilung, die für die geforderte Verringerung der Rauhigkeit geeignet ist, die für eine Rotationsbewegung um ihre Achse auf einem Sattel (5) montiert ist, der mit sehr geringer Reibung auf einer festehenden Führung (18) verschiebbar ist, die direkt oder indirekt starr auf der Basis (8) der Maschine (7), auf der die zuerst durchgeführte maschinelle Bearbeitung durchgeführt worden ist, oder auf einer ähnlichen Maschine montierbar ist, wobei auf den Sattel (5) Mittel zum Steuern der Annäherung der Schleifscheibe an die Oberfläche des Werkstückes, bis die Schleifscheibe (6) mit ihrer Umfangs-Arbeitsfläche mit der fertigzuschleifenden Oberfläche (12) in Berührung gebracht worden ist einwirken und der Sattel zusätzlich mit Mitteln versehen ist, die dazu geeignet sind, den Sattel (5) während der gesamten Fertigschleifoperation auf solche Weise vorzuspannen, daß die Arbeitsfläche der Schleifscheibe (6) an der fertigzuschleifenden Oberfläche (12) mit konstantem Druck gleichförmig, und damit unabhängig von den makrogeometrischen Fehlern der Oberfläche anliegt; wobei diese Mittel bestehen aus einem oder mehreren Gegengewichten (a, b), d. h. einem oder mehreren Kabeln (1a, 1b), die mit ihrem einen Ende an dem die Scheibe tragenden Sattel (5) und mit ihrem jeweils anderen Ende an einem oder mehreren schweren, freien Körpern (4a, 4b) befestigt sind, und einem oder mehreren Sätzen von Übertragungsrollen (2a, 2b, 3a, 3b), die mit ihren Achsen (2ab, 2bb, 3ab, 3bb) an der feststehenden Führung oder einem anderen feststehenden Teil der Werkzeugmaschine befestigt sind, so daß das oder die Kabel (1a, 1b) in Folge der Wirkung des Gewichtes der vorstehend genannten schweren Körper (4a, 4b) den Sattel (5) vorspannen, und daraus resultierend die Schleifscheibe (6) die fertigzuschleifende Oberfläche (12) ständig auf eine gleichförmige Weise berührt, wobei das Gewicht der Körper (4a, 4b) so bestimmt ist, daß der erforderliche Druckwert erreicht wird, der in der Folge durch Ändern des Gewichtes des oder der als Gegengewicht wirkenden Körper (4a, 4b) geändert werden kann.

2. Vorrichtung nach Anspruch 1, dadurch gekennzeichnet, daß das oder die Gegengewichte mit dem die Scheibe tragenden Sattel (5) so verbunden sind, daß die Resultierende ihrer Kraft auf den Sattel praktisch entlang der Längsachse der Führung (18) des Sattels (5) wirkt.

3. Vorrichtung nach Anspruch 1 und 2, dadurch gekennzeichnet, daß der die Scheibe (6) treibende Motor (20) mit dem die Scheibe tragenden Sattel (5) und möglichst auch mit der Scheibe (6) mit Mitteln verbunden ist, die geeignet sind, die Übertragung von eventuell auftretenden Vibrationen zu vermeiden.

4. Vorrichtung nach Anspruch, 1, 2 und 3, dadurch gekennzeichnet, daß ein oder mehrere entlastende Kabel (30) vorgesehen sind, die direkt oder indirekt mit dem die Scheibe tragenden Sattel (5) mit einem ihrer Enden verbindbar sind und mit ihren jeweils anderen Enden an einem, bezogen auf die Werkzeugmaschine festen Bauteil (31) befestigt sind, und daß eventuell Mittel (32) vorgesehen sind, um das oder die Kabel (30) unter Spannung zu bringen, wobei die Regelung des möglichen Spannens der Mittel (32) so ist, daß wenn sich der die Scheibe tragende Sattel (5) in seiner Arbeitsposition befindet, er nach oben durch eine vertikale resultierende Kraft entlastet wird, um die Kraft, die seine Masse auf die Führung (18) ausübt, zu verringern und dadurch die Reibungskraft zwischen Sattel (5) und Führung (18) proportional zu verringern, so daß die Wirkung des Drucks von der Schleifscheibe (6) der Vorrichtung gegen die fertigzuschleifende Oberfläche (12) mit größerer Gleichförmigkeit erfolgt.

5. Vorrichtung nach jedem der vorstehenden Ansprüche dadurch gekennzeichnet, daß nur die Mittel (a, b) vorgesehen sind, die geeignet sind, den Sattel während der gesamte Operation des Fertigschleifens zu drücken, und gegebenenfalls das oder die entlastenden Kabel (30), wobei diese Mittel direkt mit dem Sattel (5) der Scheibe (6) verbunden sind, mit der die Maschine, auf der das Schleifen durchgeführt wird, ausgerüstet ist, und üblicherweise eine Schleifmaschine ist, und daß somit diese Mittel direkt auf den Sattel (5) und damit auf die Schleifscheibe wirken.

**Revendications**

1. Dispositif pour réduire, par un meulage de finition, la rugosité de surfaces planes ou cylindriques d'une pièce usinée sur une machine-outil, à une valeur $R_a$ même inférieure à 0,001 μm, dispositif comprenant une roue de meulage (6) présentant une forme cylindrique et une granulométrie adaptée à la réduction de rugosité requise, cette roue étant montée pour tourner autour de son axe sur un support (5) en dos d'âne glissant avec un très faible frottement sur un guide fixe (18) pouvant se monter rigidement, directement ou indirectement, sur la base (8) de la machine (7) sur laquelle un premier usinage a été effectué, ou sur une machine analogue, ce support (5) étant en outre soumis à des moyens permettant de commander le rapprochement de la roue par rapport à la surface de la pièce à usiner, jusqu'à ce que la roue de meulage (6) ait été amenée en contact, par sa surface périphérique de travail, avec la surface (12) devant être soumise au meulage de finition, le dispositif étant muni de moyens conçus pour pousser le support (5) pendant toute l'opération de meulage de finition, de façon que la surface de travail de la roue (6) reste en contact avec la surface (12) devant être soumise au meulage de finition, avec une pression constante uniformémemnt appliquée sur toute la surface et par conséquent indépendamment des erreurs macrogéométriques de la surface, ces moyens étant constitués par un ou plusieurs contrepoids (a, b) c'est-à-dire par un ou plusieurs câbles (1a, 1b) fixés par l'une de leurs extrémités au support (5) portant la roue, et par leur autre extrémité à un ou plusieurs corps libres pesants respectifs (4a, 4b), et par un ou plusieurs ensembles de poulies de transmission (2a, 2b, 3a, 3b) dont l'axe (2ab, 2bb, 3ab, 3bb) est fixé au guide fixe ou à toute autre partie fixe de la machine-outil, de façon que le câble ou les câbles (1a, 1b), sous l'action du poids des corps lourds (4a, 4b) ci-dessus, poussent constamment de manière uniforme le support (5) et par conséquent la roue (6) en contact avec la surface (12), devant être soumise au meulage de finition, la valeur des poids des corps (4a, 4b) étant déterminée de manière à obtenir la valeur requise de la pression qu'on peut ensuite modifier en modifiant le poids du corps ou des corps (4a, 4b) servant de contrepoids.

2. Dispositif selon la revendication 1, caractérisé en ce que le contrepoids ou les contrepoids sont reliés au support (5) portant la roue, de façon que la résultante de leurs poussées agisse sur le support pratiquement suivant l'axe longitudinal du guide (18) du support (5).

3. Dispositif selon l'une quelconque des revendications 1 et 2, caractérisé en ce que le moteur (20) actionnant la roue (6) est relié au support (5) portant la roue, et éventuellement également à la roue (6), par des moyens conçus pour éviter la transmission de ses vibrations éventuelles.

4. Dispositif selon l'une quelconque des revendications 1 à 3, caractérisé en ce qu'il est muni d'un ou plusieurs câbles d'allégement (30) pouvant être reliés directement ou indirectement au support (5) portant la roue par l'une de leurs extrémités, et à une structure (31) fixe par rapport à la base (8) de la machine-outil par leur autre extrémité, et de moyens éventuels (32) permettant de tendre le câble ou les câbles (30), les tailles et les résistances du câble ou des câbles (30), de même que le réglage des moyens de tension éventuels (32), étant tels que lorsque le support (5) portant la roue se trouve dans sa position de travail, ce support soit soulagé par une force résultante verticale dirigée vers le haut de manière à réduire la force que sa masse applique sur le guide (18) et à réduire, par conséquent proportionnellement, le frottement entre le support (5) et le guide (18), afin que l'action de la pression de la roue (6) du dispositif contre la surface (12) devant être soumise au meulage de finition, s'effectue avec encore plus d'uniformité.

5. Dispositif selon l'une quelconque des revendications précédentes, caractérisé en ce qu'il comprend seulement les moyens (a, b) conçus pour pousser le support (5) pendant toute l'opération de meulage de finition, et éventuellement le câble ou les câbles d'allégement (30), ces moyens étant reliés directement au support (5) de la roue (6) dont est équipée la machine-outil sur laquelle est effectué le polissage, c'est-à-dire habituellement une machine de meulage, ces moyens agissant ainsi directement sur le support (5) par conséquent sur la roue.

FIG.1

FIG.2

FIG.3

EP 0 243 389 B1